# FASCICULE DE BREVET EUROPEEN

(11) **EP 2 325 067 B1**
(45) Date de publication et mention de la délivrance du brevet: **26.03.2014**
(21) Numéro de dépôt: 10192040.3
(22) Date de dépôt: 22.11.2010
(51) Int. Cl.: B62D 7/15, B62D 5/097

(54) **Système de direction pour véhicules à deux ou quatre roues directrices**
Lenksystem für Fahrzeuge mit Zwei- oder Vierradantrieb
Steering system for vehicles having two or four steerable wheels

(30) Priorité: 23.11.2009 FR 0958287
(43) Date de publication de la demande: 25.05.2011
(73) Titulaire: Artec Pulverisation, 85320 Corpe (FR)
(72) Inventeur: Arnoux, Guy, 60360, Auchy La Montagne (FR)
(74) Mandataire: Chaillot, Geneviève

(56) Documents cités:
- EP-A1- 0 131 156
- EP-A1- 1 479 595

## Description

L'invention porte sur un système de direction pour véhicules à deux ou quatre roues directrices.

On connaît des systèmes à quatre roues directrices équipant des engins agricoles, et en particulier des automoteurs de pulvérisation.

Dans ce cas, ces automoteurs sont équipés d'un dispositif de direction appelé orbitrol, qui commande hydrauliquement les roues directrices avant. L'orbitrol est un système de pompe hydraulique (qui fonctionne à l'huile) principalement utilisé pour les directions assistées de voitures et nombreux véhicules. Pour obtenir les quatre roues directrices aussi bien en marche avant qu'en marche arrière, un premier capteur mesure l'angle de braquage des roues avant. Un deuxième capteur communiquant avec le premier capteur recopie l'angle de braquage des roues avant et donne une information à un distributeur hydraulique qui commande les roues directrices arrière jusqu'à ce que celles-ci soient au même angle de braquage que les roues avant. Un tel système est décrit dans le document EP 0 131 156.

Ce principe présente plusieurs inconvénients.

En effet, les systèmes existants permettent un passage roues dans roues en marche avant, mais ne permettent pas un passage roues dans roues en marche arrière, du fait que l'information d'angle de braquage est transmise des roues avant aux roues arrière.

De plus, les systèmes existants présentent également un problème de sécurité, et particulièrement lors de la conduite des véhicules dans un mode à deux roues directrices à grande vitesse, sur route. Dans ce cas de figure, afin d'éviter tout changement trop rapide de direction, il est nécessaire que le passage du mode deux roues directrices au mode à quatre roues directrices soit empêché.

Il existe donc un besoin pour un système à mode deux roues directrices ou quatre roues directrices, permettant d'une part un passage roues dans roues en marche avant comme en marche arrière en mode quatre roues directrices, et d'autre part présentant une sécurité accrue en mode deux roues directrices, empêchant tout passage inopiné en mode quatre roues directrices.

Dans la présente description, la position médiane des roues correspond à la position dans laquelle, de chaque côté du véhicule, le plan de la roue avant et le plan de la roue arrière sont alignés. Dans la position médiane des roues avant et des roues arrière, le véhicule avance en ligne droite.

On considérera que l'angle de braquage des roues avant est mesuré par un capteur entre le plan de la roue avant gauche dans la position médiane et le plan de la roue avant gauche dans la position braquée, l'angle étant mesuré par rapport à la partie de la roue avant gauche braquée située à l'avant du véhicule et non par rapport à la partie de la roue avant gauche braquée située entre les essieux avant et arrière. Lorsque le véhicule avance, un angle de braquage positif des roues avant correspond à un virage vers la gauche, un angle de braquage négatif des roues avant correspond à un virage vers la droite.

On considérera également que l'angle de braquage des roues arrière est mesuré par un capteur entre le plan de la roue arrière gauche dans la position médiane et le plan de la roue arrière gauche dans la position braquée, l'angle étant mesuré par rapport à la partie de la roue arrière gauche braquée située à l'arrière du véhicule et non par rapport à la partie de la roue arrière gauche braquée située entre les essieux avant et arrière. Lorsque le véhicule recule, un angle de braquage positif des roues arrière correspond à un virage vers la gauche, un angle de braquage négatif des roues arrière correspond à un virage vers la droite.

Dans la terminologie utilisée dans la présente description, les roues à l'avant dans le sens du déplacement du véhicule correspondent aux roues avant du véhicule quand le véhicule avance, et aux roues arrière du véhicule quand le véhicule recule.

L'homme du métier pourra facilement transposer les enseignements de la présente invention en fonction de la position des capteurs et de la convention prise pour mesurer les angles de braquage.

La présente invention a donc pour objet un système de direction à mode deux roues directrices ou à mode quatre roues directrices, dans lequel l'orbitrol peut commander soit les roues avant, soit les roues arrière d'un système à deux ou quatre roues directrices.

La présente invention a donc pour objet un système hydraulique de direction pour véhicule, notamment un automoteur de pulvérisation, comprenant un orbitrol alimenté par une source hydraulique, un premier vérin de direction commandant le braquage des roues avant du véhicule, un deuxième vérin de direction commandant le braquage des roues arrière du véhicule, un premier capteur mesurant l'angle de braquage des roues avant, un deuxième capteur mesurant l'angle de braquage des roues arrière et en communication avec le premier capteur, caractérisé par le fait que le système comprend en outre un distributeur à quatre orifices et trois états alimenté par une source hydraulique, une première chambre du premier vérin étant reliée hydrauliquement à une première sortie de l'orbitrol et à une première sortie du distributeur à quatre orifices et trois états par un premier distributeur à trois orifices et deux états, la deuxième chambre du premier vérin étant reliée hydrauliquement à la deuxième sortie de l'orbitrol et à la deuxième sortie du distributeur à quatre orifices et trois états par un deuxième distributeur à trois orifices et deux états, une première chambre du deuxième vérin étant reliée hydrauliquement à la première sortie de l'orbitrol et à la première sortie du distributeur à quatre orifices et trois états par un troisième distributeur à trois orifices et deux états, la deuxième chambre du deuxième vérin étant reliée hydrauliquement à la deuxième sortie de l'orbitrol et à la deuxième sortie du distributeur à quatre orifices et trois états par un quatrième distributeur à trois orifices et deux états, les états des distributeurs à trois orifices et deux états étant commandés de telle sorte que, dans un sens de déplacement donné du véhicule, l'orbitrol commande hydrauliquement le vérin de direction des roues à l'avant dans le sens du déplacement du véhicule, le capteur sur les roues à l'arrière dans le sens de déplacement du véhicule commandant le distributeur à quatre orifices et trois états pour alimenter le vérin de direction des roues à l'arrière dans le sens de déplacement du véhicule pour que l'angle de braquage des roues à l'arrière dans le sens de déplacement du véhicule soit égal à une valeur de consigne fonction du mode de direction du véhicule et de l'angle de braquage mesuré par le capteur d'angle de braquage des roues à l'avant dans le sens de déplacement du véhicule.

Le mode de direction signifie, par exemple dans le cas d'un véhicule à quatre roues, un mode à quatre roues directrices ou un mode à deux roues directrices.

Dans un mode de réalisation préféré pour un véhicule à quatre roues, la valeur de consigne est égale à l'angle de braquage ou à la valeur opposée de l'angle de braquage dans le mode à quatre roues directrices, et est égale à 0 dans le mode à deux roues directrices.

Selon des caractéristiques facultatives de l'invention :
- le système comprend en outre un cinquième distributeur à trois orifices et à deux états, alimenté par une source hydraulique et commandé par un signal électrique correspondant à un sens du déplacement du véhicule, ledit cinquième distributeur à trois orifices et à deux états commandant hydrauliquement les états des premier à quatrième distributeurs à trois orifices et deux états en fonction du sens de déplacement du véhicule ;
- l'état par défaut du cinquième distributeur à trois orifices et à deux états correspondant à un défaut d'alimentation électrique de celui-ci place les premier à quatrième distributeurs à trois orifices et deux états dans l'état dans lequel l'orbitrol commande hydrauliquement le vérin de direction des roues avant ;
- l'état par défaut du distributeur à quatre orifices et trois états correspondant à un défaut d'alimentation électrique de celui-ci place le distributeur à quatre orifices et trois états dans l'état dans lequel aucun fluide hydraulique ne peut sortir du distributeur à quatre orifices et trois états ;
- le système comprend un dispositif permettant de sélectionner un déplacement en crabe ou de type virage roues dans roues du véhicule, apte à envoyer un signal aux premier et deuxième capteurs, afin de régler la valeur de consigne égale à la valeur de l'angle de braquage pour un déplacement de type virage roues dans roues du véhicule, et égale à la valeur opposée de l'angle de braquage pour un déplacement en crabe du véhicule, dans le mode de direction à quatre roues directrices ;
- le système comprend en outre un premier distributeur à deux orifices et deux états entre la première chambre du deuxième vérin et le troisième distributeur à trois orifices et deux états et un deuxième distributeur à deux orifices et deux états entre la deuxième chambre du deuxième vérin et le quatrième distributeur à trois orifices et deux états, les distributeurs à deux orifices et deux états étant commandés par un signal électrique pour permettre un passage du fluide hydraulique entre le deuxième vérin et l'orbitrol ou le distributeur à quatre orifices et trois états dans un premier état correspondant à un mode quatre roues directrices du véhicule, et pour empêcher un passage du fluide hydraulique entre le deuxième vérin et l'orbitrol ou le distributeur à quatre orifices et trois états dans un deuxième état correspondant à un mode à deux roues directrices du véhicule ;
- le deuxième capteur est apte à commander les distributeurs à deux orifices et deux états et le distributeur à quatre orifices et trois états pour ramener les roues arrière à une position correspondant à un angle de braquage nul des roues arrière lors du passage du mode quatre roues directrices au mode deux roues directrices du véhicule, cette valeur d'angle de braquage nul étant avantageusement maintenue tant que le véhicule reste en mode de direction à deux roues directrices ;
- une même source hydraulique peut alimenter l'orbitrol et le distributeur à quatre orifices et trois états ; et
- l'état par défaut des distributeurs à deux orifices et deux états correspondant à un défaut d'alimentation électrique de ceux-ci placent les distributeurs à deux orifices et deux états dans l'état dans lequel le passage de fluide à travers ceux-ci est interdit.

Le système de direction de l'invention s'applique de préférence à un véhicule à quatre roues ayant deux roues avant directrices et deux roues arrière directrices.

Il est aussi adaptable à des véhicules ayant plusieurs paires de roues avant et/ou arrière directrices, les paires de roues avant directrices braquant toutes suivant le même angle simultanément et les paires de roues arrière directrices braquant toutes suivant le même angle simultanément, et également à un véhicule ayant entre les roues avant directrices et les roues arrière directrices un ou plusieurs essieux centraux, portant des roues non-directrices. Pour ce type de véhicule à essieux centraux portant des roues non-directrices, le déplacement en crabe n'est pas autorisé, mais le déplacement de type roues dans roues en marche avant comme en marche arrière est possible, comme cela est décrit dans la description détaillée suivante en référence à un véhicule à quatre roues.

Pour mieux illustrer l'objet de la présente invention, on va maintenant en décrire un mode de réalisation préféré, en référence au dessin annexé.

Sur ce dessin :
- la Figure 1 est une vue schématique du système de direction d'un système à deux ou quatre roues directrices selon la présente invention ;
- la Figure 2 est une vue schématique de la source ;
- la Figure 3 est une vue schématique de dessus des roues en mode deux roues directrices ;
- la Figure 4 est une vue schématique de dessus des roues en mode quatre roues directrices ; et
- la Figure 5 est une vue schématique de dessus des roues en configuration crabe.

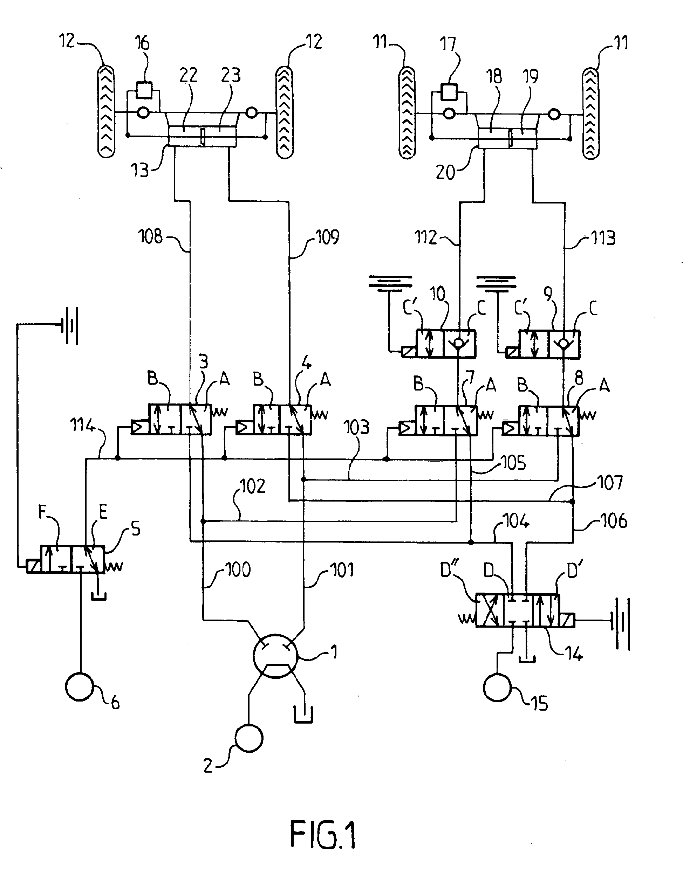

Si l'on se réfère à la Figure 1, on peut voir qu'il y est représenté un système de direction pour véhicule à mode deux ou quatre roues directrices selon l'invention.

Dans un premier mode de réalisation, le système comprend un orbitrol 1 alimenté par une source hydraulique 2, et un distributeur 14 à quatre orifices et trois états ou positions, alimenté par une source hydraulique 15.

Des canalisations, respectivement 100, 101, 102, 103 relient l'orbitrol 1 à une première entrée de distributeurs hydrauliques 3, 4, 7 et 8 à trois orifices et deux états A et B.

Des canalisations 104 et 105 relient une première sortie du distributeur 14 à une deuxième entrée des distributeurs hydrauliques 3 et 7, et des canalisations 106 et 107 relient une deuxième sortie du distributeur 14 à une deuxième entrée des distributeurs hydrauliques 4 et 8.

Les sorties des distributeurs 3 et 4 sont reliées par des canalisations 108 et 109 aux chambres 22 et 23 du vérin de direction 13, qui commande le braquage des roues avant 12.

Les sorties des distributeurs 7 et 8 sont reliées respectivement à des entrées de distributeurs à deux orifices et deux états 9 et 10 par l'intermédiaire de canalisations 110 et 111, et les sorties des distributeurs 9 et 10 sont reliées aux chambres 18 et 19 du vérin de direction 20 par l'intermédiaire de canalisations 112 et 113, lequel vérin de direction 20 commande le braquage des roues arrière 11.

Un distributeur 5 à trois orifices et deux états E et F, commandé électriquement, alimenté par une source hydraulique 6, pilote hydrauliquement par une canalisation 114 les états des distributeurs 3, 4, 7 et 8.

Dans l'état ou position A, les distributeurs 3 et 4 envoient dans le vérin de direction 13 le fluide provenant de l'orbitrol 1, alimenté depuis la source 2.

Dans l'état ou position B, les distributeurs 3 et 4 envoient dans le vérin de direction 13 le fluide provenant du distributeur 14, alimenté depuis la source 15.

Dans la position A, les distributeurs 7 et 8 envoient dans les distributeurs respectivement 10 et 9 le fluide provenant du distributeur 14, alimenté depuis la source 15.

Dans la position B, les distributeurs 7 et 8 envoient dans les distributeurs respectivement 10 et 9 le fluide provenant de l'orbitrol 1, alimenté depuis la source 2.

L'état des distributeurs 9 et 10, passant (C') ou bloqué (C), est commandé par un signal électrique.

De même, l'état du distributeur 14, fluide passant dans le circuit hydraulique dans un premier sens (D'), fluide passant dans le circuit hydraulique dans un second sens opposé au premier sens (D''), ou fluide ne circulant pas dans le circuit (D) est commandé par un signal électrique.

Enfin, l'état du distributeur 5, passant F ou bloqué E, est lui aussi commandé par un signal électrique.

Des capteurs, respectivement 16 et 17, détectent l'angle de braquage des roues, respectivement avant 12 et arrière 11.

En marche avant, dans le mode quatre roues directrices, l'absence de signal électrique commande le distributeur 5 à rester dans l'état bloqué E, les distributeurs 3, 4, 7 et 8 n'étant pas pilotés hydrauliquement restent dans l'état A. De même, dans ce mode à quatre roues directrices en marche avant, un signal électrique commande les distributeurs 9 et 10 à passer dans l'état passant C'.

Ainsi, dans ce premier mode de fonctionnement du système de l'invention, l'orbitrol 1, alimenté hydrauliquement par la source 2, envoie le fluide dans les distributeurs 3 et 4, dans l'état A, qui envoient à leur tour le fluide dans le vérin de direction 13, commandant ainsi un braquage des roues avant 12. L'angle de braquage des roues avant 12 est détecté par le capteur 16.

Le capteur 17 recopie l'angle de braquage enregistré par le capteur 16, et commande le distributeur 14, alimenté par la source 15, pour envoyer du fluide par l'intermédiaire des distributeurs 7 et 8 dans l'état A, et des distributeurs 10 et 9 dans l'état passant C', dans le vérin de direction 20 jusqu'à ce que les deux valeurs angulaires mesurées par les capteurs 16 et 17 soient égales ou opposées.

En marche arrière, dans le mode quatre roues directrices, un signal électrique commande le distributeur 5 à passer dans l'état passant F, qui commande à son tour hydrauliquement les distributeurs 3, 4, 7 et 8 à passer dans l'état B. De même, dans ce mode à quatre roues directrices en marche arrière, un signal électrique commande les distributeurs 9 et 10 à passer dans l'état passant C'.

Ainsi, dans ce deuxième mode de fonctionnement du système de l'invention, l'orbitrol 1, alimenté hydrauliquement par la source 2, envoie le fluide dans les distributeurs 7 et 8, dans l'état B, qui envoient à leur tour le fluide par l'intermédiaire des distributeurs 10 et 9 dans l'état passant C', dans le vérin de direction 20, qui commande le braquage des roues arrière 11. L'angle de braquage des roues arrière 11 est détecté par le capteur 17.

Le capteur 16 recopie l'angle de braquage enregistré par le capteur 17, et commande le distributeur 14, alimenté par la source 15, pour envoyer du fluide par l'intermédiaire des distributeurs 3 et 4 dans l'état B dans le vérin de direction 20 jusqu'à ce que les deux valeurs angulaires mesurées par les capteurs 17 et 16 soient égales ou opposées.

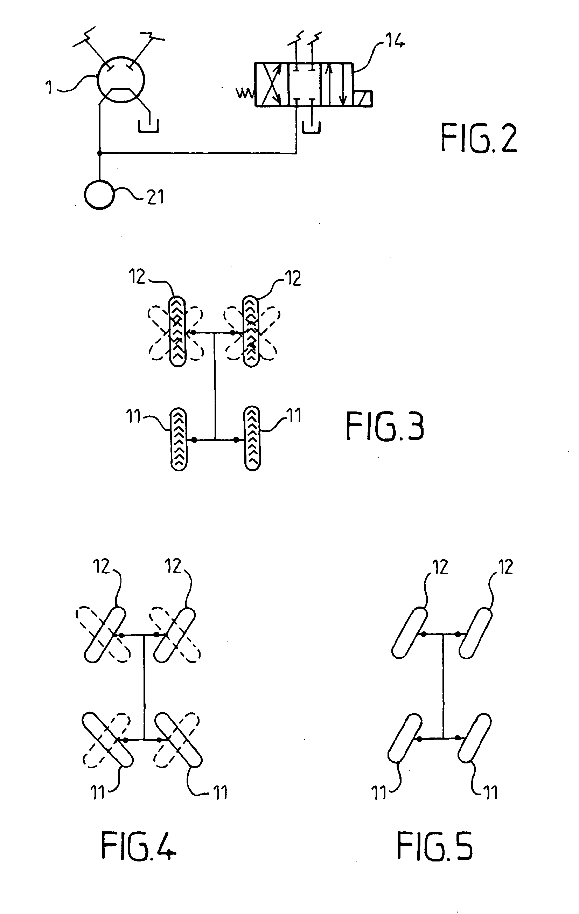

En marche avant avec deux roues directrices uniquement (roues avant), aucun signal électrique ne commande le distributeur 5 qui ne peut donc plus commander hydrauliquement les distributeurs 3 et 4, lesquels restent donc dans l'état A, qui est l'état par défaut des distributeurs 3, 4, 7 et 8 lorsque le distributeur 5 n'est commandé par aucun signal électrique. De même, dans ce mode à deux roues avant directrices en marche avant, un signal électrique délivré par le capteur 17 commande les distributeurs 14, 10 et 9 afin de ramener les roues arrière 11 dans la position médiane représentée sur la Figure 3.

Une fois les roues arrière 11 en position médiane, la capteur 17 n'envoie plus de signal électrique pour commander les distributeurs 14, 10 et 9, qui passent donc dans l'état bloqué respectivement D et C, si bien qu'il n'y a plus de circulation de fluide vers le vérin de direction 20, et plus de circulation de fluide du vérin 20 vers les autres distributeurs 7 et 8, et que les roues arrière 11 restent par conséquent dans la position médiane.

Comme dans le cas pour la marche avant à quatre roues directrices, l'orbitrol 1, alimenté hydrauliquement par la source 2, envoie le fluide dans les distributeurs 3 et 4, dans l'état A, qui envoient à leur tour le fluide dans le vérin de direction 13, commandant ainsi un braquage des roues avant 12.

Le système de sécurité consiste en ce que le distributeur 5 n'est pas alimenté électriquement, empêchant les distributeurs 3, 4 de passer à l'état B, et en ce que, après une période où le capteur 17 envoie une consigne électrique aux distributeurs 9, 10 et 14 pour mettre les roues arrière 11 en position médiane, aucune consigne électrique n'est envoyée aux distributeurs 9, 10 et 14, qui empêchent toute circulation de fluide entre les chambres 18 et 19 du vérin de direction 20 des roues arrière 11. Ainsi, non seulement on s'assure que les roues arrière 11 sont dans la position médiane, mais encore on fait en sorte qu'elles ne puissent plus braquer en empêchant toute circulation de fluide dans le circuit des roues arrière 11.

Dans un autre mode de réalisation représenté sur la Figure 2, une seule source hydraulique 21 alimente à la fois l'orbitrol 1 et le distributeur 14.

Les Figures 4 et 5 illustrent les différentes configurations que l'on peut obtenir en mode quatre roues directrices : soit virage roues dans roues (Figure 4), soit déplacement en « crabe » (Figure 5), la configuration étant déterminée par les valeurs relatives des angles mesurés par les capteurs 16 et 17. Pour avoir une configuration selon la Figure 4, les angles mesurés par les capteurs doivent être égaux, tandis que pour avoir une configuration selon la Figure 5, les angles mesurés doivent être opposés.

## Revendications

1. Système hydraulique de direction pour véhicule, notamment un automoteur de pulvérisation, comprenant un orbitrol (1) alimenté par une source hydraulique (2; 21), un premier vérin de direction (13) commandant le braquage des roues avant (12) du véhicule, un deuxième vérin de direction (20) commandant le braquage des roues arrière (11) du véhicule, un premier capteur (16) mesurant l'angle de braquage des roues avant (12), un deuxième capteur (17) mesurant l'angle de braquage des roues arrière (11) et en communication avec le premier capteur (16),
**caractérisé par le fait que** le système comprend en outre un distributeur à quatre orifices et trois états (14) alimenté par une source hydraulique (15; 21), une première chambre (22) du premier vérin (13) étant reliée hydrauliquement à une première sortie de l'orbitrol (1) et à une première sortie du distributeur à quatre orifices et trois états (14) par un premier distributeur à trois orifices et deux états (3), la deuxième chambre (23) du premier vérin (13) étant reliée hydrauliquement à la deuxième sortie de l'orbitrol (1) et à la deuxième sortie du distributeur à quatre orifices et trois états (14) par un deuxième distributeur à trois orifices et deux états (4), une première chambre (18) du deuxième vérin (20) étant reliée hydrauliquement à la première sortie de l'orbitrol (1) et à la première sortie du distributeur à quatre orifices et trois états (14) par un troisième distributeur à trois orifices et deux états (7), la deuxième chambre (19) du deuxième vérin (20) étant reliée hydrauliquement à la deuxième sortie de l'orbitrol (1) et à la deuxième sortie du distributeur à quatre orifices et trois états (14) par un quatrième distributeur à trois orifices et deux états (8), les états des distributeurs à trois orifices et deux états (3, 4, 7, 8) étant commandés de telle sorte que, dans un sens de déplacement donné du véhicule, l'orbitrol (1) commande hydrauliquement le vérin de direction des roues à l'avant dans le sens du déplacement du véhicule, le capteur sur les roues à l'arrière dans le sens de déplacement du véhicule commandant le distributeur à quatre orifices et trois états (14) pour alimenter le vérin de direction des roues à l'arrière dans le sens de déplacement du véhicule pour que l'angle de braquage des roues à l'arrière dans le sens de déplacement du véhicule soit égal à une valeur de consigne (α) fonction du mode de direction du véhicule et de l'angle de braquage (β) mesuré par le capteur d'angle de braquage des roues à l'avant dans le sens de déplacement du véhicule.

2. Système hydraulique de direction selon la revendication 1, **caractérisé par le fait qu'**il comprend en outre un cinquième distributeur à trois orifices et à deux états (5), alimenté par une source hydraulique (6) et commandé par un signal électrique correspondant à un sens du déplacement du véhicule, ledit cinquième distributeur à trois orifices et à deux états (5) commandant hydrauliquement les états des premier à quatrième distributeurs à trois orifices et deux états (3, 4, 7, 8) en fonction du sens de déplacement du véhicule.

3. Système hydraulique de direction selon la revendication 2, **caractérisé par le fait que** l'état par défaut du cinquième distributeur à trois orifices et à deux états (5) correspondant à un défaut d'alimentation électrique de celui-ci place les premier à quatrième distributeurs à trois orifices et deux états (3, 4, 7, 8) dans l'état dans lequel l'orbitrol (1) commande hydrauliquement le vérin de direction (13) des roues avant (12).

4. Système hydraulique de direction selon l'une des revendications 1 à 3, **caractérisé par le fait que** l'état par défaut du distributeur à quatre orifices et trois états (14) correspondant à un défaut d'alimentation électrique de celui-ci place le distributeur à quatre orifices et trois états (14) dans l'état dans lequel aucun fluide hydraulique ne peut sortir du distributeur à quatre orifices et trois états (14).

5. Système hydraulique de direction selon l'une des revendications 1 à 4, **caractérisé par le fait qu'**il comprend un dispositif permettant de sélectionner un déplacement en crabe ou de type virage roues dans roues du véhicule, apte à envoyer un signal aux premier et deuxième capteurs (16, 17), afin de régler la valeur de consigne (α) égale à la valeur de l'angle de braquage (β) pour un déplacement de type virage roues dans roues du véhicule, et égale à la valeur opposée de l'angle de braquage (β) pour un déplacement en crabe du véhicule, dans le mode de direction à quatre roues directrices.

6. Système hydraulique de direction selon l'une des revendications 1 à 5, **caractérisé par le fait qu'**il comprend en outre un premier distributeur à deux orifices et deux états (10) entre la première chambre (18) du deuxième vérin (20) et le troisième distributeur à trois orifices et deux états (7) et un deuxième distributeur à deux orifices et deux états (9) entre la deuxième chambre (19) du deuxième vérin (20) et le quatrième distributeur à trois orifices et deux états (8), les distributeurs à deux orifices et deux états (9, 10) étant commandés par un signal électrique pour permettre un passage du fluide hydraulique entre le deuxième vérin (20) et l'orbitrol (1) ou le distributeur à quatre orifices et trois états (14) dans un premier état correspondant à un mode quatre roues directrices du véhicule, et pour empêcher un passage du fluide hydraulique entre le deuxième vérin (20) et l'orbitrol (1) ou le distributeur à quatre orifices et trois états (14) dans un deuxième état correspondant à un mode à deux roues directrices du véhicule.

7. Système hydraulique de direction selon la revendication 6, **caractérisé par le fait que** le deuxième capteur (17) est apte à commander les distributeurs à deux orifices et deux états (9, 10) et le distributeur à quatre orifices et trois états (14) pour ramener les roues arrière (11) à une position correspondant à un angle de braquage nul des roues arrière (11) lors du passage du mode quatre roues directrices au mode deux roues directrices du véhicule.

8. Système hydraulique de direction selon l'une des revendications 1 à 7, **caractérisé par le fait qu'**une même source hydraulique (21) alimente l'orbitrol (1) et le distributeur à quatre orifices et trois états (14).

9. Système hydraulique de direction selon l'une des revendications 6 à 8, **caractérisé par le fait que** l'état par défaut des distributeurs à deux orifices et deux états (9, 10) correspondant à un défaut d'alimentation électrique de ceux-ci placent les distributeurs à deux orifices et deux états (9, 10) dans l'état dans lequel le passage de fluide à travers ceux-ci est interdit.

## Patentansprüche

1. Hydraulisches Lenksystem für ein Fahrzeug, insbesondere einen Pflanzenschutz-Selbstfahrer, umfassend ein Lenkaggregat (1), das von einer Hydraulikquelle (2; 21) gespeist wird, einen ersten Lenkzylinder (13), der den Lenkeinschlag der Vorderräder (12) des Fahrzeugs steuert, einen zweiten Lenkzylinder (20), der den Lenkeinschlag der Hinterräder (11) des Fahrzeugs steuert, einen ersten Sensor (16), der den Einschlagwinkel der Vorderräder (12) misst, einen zweiten Sensor (17), der den Einschlagwinkel der Hinterräder (11) misst und zu dem ersten Sensor (16) eine Datenübertragungsverbindung aufweist,
**dadurch gekennzeichnet, dass** das System ferner ein Vierwegeventil mit drei Zuständen (14) umfasst, das von einer Hydraulikquelle (15; 21) gespeist wird, wobei eine erste Kammer (22) des ersten Zylinders (13) hydraulisch mit einem ersten Ausgang des Lenkaggregats (1) und mit einem ersten Ausgang des Vierwegeventils mit drei Zuständen (14) über ein erstes Dreiwegeventil mit zwei Zuständen (3) verbunden ist, wobei die zweite Kammer (23) des ersten Zylinders (13) hydraulisch mit dem zweiten Ausgang des Lenkaggregats (1) und mit dem zweiten Ausgang des Vierwegeventils mit drei Zuständen (14) über ein zweites Dreiwegeventil mit zwei Zuständen (4) verbunden ist, wobei eine erste Kammer (18) des zweiten Zylinders (20) hydraulisch mit dem ersten Ausgang des Lenkaggregats (1) und mit dem ersten Ausgang des Vierwegeventils mit drei Zuständen (14) über ein drittes Dreiwegeventil mit zwei Zuständen (7) verbunden ist, wobei die zweite Kammer (19) des zweiten Zylinders (20) hydraulisch mit dem zweiten Ausgang des Lenkaggregats (1) und dem zweiten Ausgang des Vierwegeventils mit drei Zuständen (14) über ein viertes Dreiwegeventil mit zwei Zuständen (8) verbunden ist, wobei die Zustände der Dreiwegeventile mit zwei Zuständen (3, 4, 7, 8) derart gesteuert sind, dass in einer bestimmten Fortbewegungsrichtung des Fahrzeugs das Lenkaggregat (1) den Lenkzylinder der in der Fortbewegungsrichtung des Fahrzeugs vorderen Räder hydraulisch steuert, wobei der Sensor an den in der Fortbewegungsrichtung des Fahrzeugs hinteren Rädern das Vierwegeventil mit drei Zuständen (14) steuert, um den Lenkzylinder der in der Fortbewegungsrichtung des Fahrzeugs hinteren Räder zu speisen, damit der Einschlagwinkel der in der Fortbewegungsrichtung des Fahrzeugs hinteren Räder einem Einstellwert (α) entspricht, der von dem Lenkmodus des Fahrzeugs und dem Einschlagwinkel (β) abhängt, der von dem Sensor für den Einschlagwinkel der in der Fortbewegungsrichtung des Fahrzeugs vorderen Räder gemessen wird.

2. Hydraulisches Lenksystem nach Anspruch 1, **dadurch gekennzeichnet, dass** es ferner ein fünftes Dreiwegeventil mit zwei Zuständen (5) umfasst, das von einer Hydraulikquelle (6) gespeist wird und von einem elektrischen Signal gesteuert wird, das einer Fortbewegungsrichtung des Fahrzeugs entspricht, wobei das fünfte Dreiwegeventil mit zwei Zuständen (5) hydraulisch die Zustände des ersten bis vierten Dreiwegeventils mit zwei Zuständen (3, 4, 7, 8) in Abhängigkeit von der Fortbewegungsrichtung des Fahrzeugs steuert.

3. Hydraulisches Lenksystem nach Anspruch 2, **dadurch gekennzeichnet, dass** der voreingestellte Zustand des fünften Dreiwegeventils mit zwei Zuständen (5), der einer fehlenden Stromversorgung desselben entspricht, das erste bis vierte Dreiwegeventil mit zwei Zuständen (3, 4, 7, 8) in den Zustand versetzt, in dem das Lenkaggregat (1) hydraulisch den Lenkzylinder (13) der Vorderräder (12) steuert.

4. Hydraulisches Lenksystem nach einem der Ansprüche 1 bis 3, **dadurch gekennzeichnet, dass** der voreingestellte Zustand des Vierwegeventils mit drei Zuständen (14), der einer fehlenden Stromversorgung desselben entspricht, das Vierwegeventil mit drei Zuständen (14) in den Zustand versetzt, in dem keine Hydraulikflüssigkeit aus dem Vierwegeventil mit drei Zuständen (14) gelangen kann.

5. Hydraulisches Lenksystem nach einem der Ansprüche 1 bis 4, **dadurch gekennzeichnet, dass** es eine Vorrichtung umfasst, die es ermöglicht, einen Hundegang oder eine spurgetreue Kurvenfahrt des Fahrzeugs auszuwählen und in der Lage ist, ein Signal an den ersten und zweiten Sensor (16, 17) zu senden, um den Einstellwert (α) einzustellen, der im Lenkmodus mit vier lenkbaren Rädern bei einer spurgetreuen Kurvenfahrt des Fahrzeugs dem Wert des Einschlagwinkels (β) entspricht und bei einem Hundegang des Fahrzeugs dem Wert entgegengesetzt zum Einschlagwinkel (β) entspricht.

6. Hydraulisches Lenksystem nach einem der Ansprüche 1 bis 5, **dadurch gekennzeichnet, dass** es ferner ein erstes Zweiwegeventil mit zwei Zuständen (10) zwischen der ersten Kammer (18) des zweiten Zylinders (20) und dem dritten Dreiwegeventil mit zwei Zuständen (7) und ein zweites Zweiwegeventil mit zwei Zuständen (9) zwischen der zweiten Kammer (19) des zweiten Zylinders (20) und dem vierten Dreiwegeventil mit zwei Zuständen (8) umfasst, wobei die Zweiwegeventile mit zwei Zuständen (9, 10) von einem elektrischen Signal gesteuert werden, um in einem ersten Zustand, der einem Allradlenkmodus des Fahrzeugs entspricht, Hydraulikflüssigkeit zwischen dem zweiten Zylinder (20) und dem Lenkaggregat (1) oder dem Vierwegeventil mit drei Zuständen (14) fließen zu lassen und um in einem zweiten Zustand, der einem Zweiradlenkmodus des Fahrzeugs entspricht, zu verhindern, dass Hydraulikflüssigkeit zwischen dem zweiten Zylinder (20) und dem Lenkaggregat (1) oder dem Vierwegeventil mit drei Zuständen (14) fließt.

7. Hydraulisches Lenksystem nach Anspruch 6, **dadurch gekennzeichnet, dass** der zweite Sensor (17) in der Lage ist, die Zweiwegeventile mit zwei Zuständen (9, 10) und das Vierwegeventil mit drei Zuständen (14) so zu steuern, dass die Hinterräder (11) beim Übergang vom Allradlenkmodus zum Zweiradlenkmodus des Fahrzeugs in eine Stellung gebracht werden, die einem Einschlagwinkel von Null der Hinterräder (11) entspricht.

8. Hydraulisches Lenksystem nach einem der Ansprüche 1 bis 7, **dadurch gekennzeichnet, dass** ein und dieselbe Hydraulikquelle (21) das Lenkaggregat (1) und das Vierwegeventil mit drei Zuständen (14) speist.

9. Hydraulisches Lenksystem nach einem der Ansprüche 6 bis 8, **dadurch gekennzeichnet, dass** der voreingestellte Zustand der Zweiwegeventile mit zwei Zuständen (9, 10), der einer fehlenden Stromversorgung derselben entspricht, die Zweiwegeventile mit zwei Zuständen (9, 10) in den Zustand versetzt, in dem keine Flüssigkeit durch sie hindurch fließen darf.

## Claims

1. Hydraulic steering system for a vehicle, in particular a self-propelled sprayer, comprising an orbitrol (1) powered by a hydraulic source (2; 21), a first steering cylinder (13) controlling the steering of the vehicle front wheels (12), a second steering cylinder (20) controlling the steering of the vehicle rear wheels (11), a first sensor (16) measuring the steering angle of the front wheels (12), a second sensor (17) measuring the steering angle of the rear wheels (11) and communicating with the first sensor (16),
**characterized in that** the system further comprises a three-position four-port air-operated valve (14) powered by a hydraulic source (15; 21), a first chamber (22) of the first cylinder (13) being hydraulically connected to a first outlet of the orbitrol (1) and to a first outlet of the three-position four-port air-operated valve (14) by a first two-position three-port air-operated valve (3), the second chamber (23) of the first cylinder (13) being hydraulically connected to the second outlet of the orbitrol (1) and to the second outlet of the three-position four-port air-operated valve (14) by a second two-position three-port air-operated valve (4), a first chamber (18) of the second cylinder (20) being hydraulically connected to the first outlet of the orbitrol (1) and to the first outlet of the three-position four-port air-operated valve (14) by a third two-position three-port air-operated valve (7), the second chamber (19) of the second cylinder (20) being hydraulically connected to the second outlet of the orbitrol (1) and to the second outlet of the three-position four-port air-operated valve (14) by a fourth two-position three-port air-operated valve (8), the positions of the two-position three-port air-operated valves (3, 4, 7, 8) being controlled such that, in a given vehicle displacement direction, the orbitrol (1) hydraulically controls the steering cylinder of the front wheels in the vehicle displacement direction, the sensor on the rear wheels in the vehicle displacement direction controlling the three-position four-port air-operated valve (14) to power the steering cylinder of the rear wheels in the vehicle displacement direction such that the steering angle of the rear wheels in the vehicle displacement direction is equal to a set value (α) depending on the vehicle steering mode and the steering angle (β) measured by the steering angle sensor of the front wheels in the vehicle displacement direction.

2. Hydraulic steering system according to claim 1, **characterized in that** it further comprises a fifth two-position three-port air-operated valve (5), powered by a hydraulic source (6) and controlled by an electrical signal corresponding to a vehicle displacement direction, said fifth two-position three-port air-operated valve (5) hydraulically controlling the positions of the first to fourth two-position three-port air-operated valves (3, 4, 7, 8) according to the vehicle displacement direction.

3. Hydraulic steering system according to claim 2, **characterized in that** the default position of the fifth two-position three-port air-operated valve (5) corresponding to a lack of electrical supply thereof sets the first to fourth two-position three-port air-operated valves (3, 4, 7, 8) in the position in which the orbitrol (1) hydraulically controls the steering cylinder (13) of the front wheels (12).

4. Hydraulic steering system according to one of claims 1 to 3, **characterized in that** the default position of the three-position four-port air-operated valve (14) corresponding to a lack of electrical supply thereof sets the three-position four-port air-operated valve (14) in a position in which no hydraulic fluid can flow out of the three-position four-port air-operated valve (14).

5. Hydraulic steering system according to one of claims 1 to 4, **characterized in that** it comprises a device for selecting a crab steering or a wheel-in-wheel turn-type steering of the vehicle, adapted to send a signal to the first and second sensors (16, 17), so as to regulate the set value (α) equal to the value of the steering angle (β) for a wheel-in-wheel turn-type steering displacement of the vehicle, and equal to the opposite value of the steering angle (β) for a crab steering of the vehicle, in the four-steering wheel steering mode.

6. Hydraulic steering system according to one of claims 1 to 5, **characterized in that** it further comprises a first two-position two-port air-operated valve (10) between the first chamber (18) of the second cylinder (20) and the third two-position three-port air-operated valve (7), and a second two-position two-port air-operated valve (9) between the second chamber (19) of the second cylinder (20) and the fourth two-position three-port air-operated valve (8), the two-position two-port air-operated valves (9, 10) being controlled by an electrical signal to allow a hydraulic fluid flow between the second cylinder (20) and the orbitrol (1) or the three-position four-port air-operated valve (14) in a first position corresponding to a four-steering wheels mode of the vehicle, and to prevent a hydraulic fluid flow between the second cylinder (20) and the orbitrol (1) or the three-position four-port air-operated valve (14) in a second position corresponding to a two-steering wheels mode of the vehicle.

7. Hydraulic steering system according to claim 6, **characterized in that** the second sensor (17) is adapted to control the two-position two-port air-operated valves (9, 10) and the three-position four-port air-operated valve (14) to bring the rear wheels (11) back to a position corresponding to a zero steering angle of the rear wheels (11) upon switching from the four-steering wheels mode to the two-steering wheels mode of the vehicle.

8. Hydraulic steering system according to one of claims 1 to 7, **characterized in that** a same hydraulic source (21) powers the orbitrol (1) and the three-position four-port air-operated valve (14).

9. Hydraulic steering system according to one of claims 6 to 8, **characterized in that** the default position of the two-position two-port air-operated valves (9, 10) corresponding to a lack of electrical supply thereof sets the two-position two-port air-operated valves (9, 10) in a position in which the fluid flow therethrough is prohibited.
